# EUROPEAN PATENT SPECIFICATION

(11) **EP 3 682 743 B1**
(45) Date of publication and mention of the grant of the patent: **01.11.2023**
(21) Application number: 20151032.8
(22) Date of filing: 09.01.2020
(51) Int. Cl.: A23G 9/08, A23G 9/12, A23G 9/22

(54) **WHIPPING DEVICE AND MACHINE FOR PRODUCING AND STORING ICE CREAMS AND SIMILAR PRODUCTS COMPRISING SAID WHIPPING DEVICE**
AUFSCHLAGVORRICHTUNG UND MASCHINE ZUR HERSTELLUNG UND LAGERUNG VON EISCREMES UND ÄHNLICHEN PRODUKTEN MIT DIESER AUFSCHLAGVORRICHTUNG
DISPOSITIF DE FOUETTAGE ET MACHINE POUR LA PRODUCTION ET LE STOCKAGE DE CRÈMES GLACÉES ET PRODUITS SIMILAIRES COMPRENANT LEDIT DISPOSITIF DE FOUETTAGE

(30) Priority: 17.01.2019 IT 201900000711
(43) Date of publication of application: 22.07.2020
(73) Proprietor: Frigomat S.r.l., 20122 Milano (IT)
(72) Inventor: SOFFIENTINI, Paolo, 26862 Guardamiglio (Lodi) (IT)
(74) Representative: Botti & Ferrari S.p.A.

(56) References cited:
- EP-A1- 3 036 998
- EP-A1- 3 338 560
- US-A1- 2010 175 390
- US-A1- 2015 208 829

## Description

### Field of application

The present invention relates to a whipping device for the production of ice creams or similar cold products such as granitas and sorbets.

In particular, the present invention relates to a whipping device of the aforementioned type, provided with a system for preventing the formation ice due to condensed vapour.

The present invention also relates to a machine for producing and storing ice creams and similar cold products (for example granitas and sorbets) comprising at least one whipping device according to at least claim 1.

### Prior art

As is known, the machines intended for the preparation of the so-called "fresh" whipped ice cream produced and served to the consumer in artisanal ice cream parlours comprise a display and sales counter which has, on view, a plurality of whipping devices for preparing and storing the ice cream so that the consumer is able to view the production of the ice cream from the whipping stage to the stage for storing and dispensing the ice cream.

With these machines it is possible to produce the ice cream and store it in the same container in which it was produced, thus avoiding the need for the ice cream maker to have to buy and have available two separate machines, namely the whipping machine and the conventional refrigerated display counter.

It is also known that the whipping devices used in the aforementioned machines for the production of ice creams or the like each generally have a cylindrical container which can be cooled and inside which there is a rotatable stirrer formed by a shaft on which there are mounted one or more blades or knives which during rotation scrape the cooled part of the cylindrical container and mix the ice cream mixture with the prechosen flavour introduced beforehand into the cylindrical container, bringing it in succession into contact with the cooled wall until a coherent mass of ice cream is formed.

Moreover, the ice cream once produced is usually dispensed using a scoop which is uniquely associated with a respective cylindrical container so as to prevent the contents of different containers, which are usually different from each other, from being mixed together.

Despite the fact that the machines with the respective whipping devices mentioned above are mostly satisfactory from the functional point of view, they have the drawback that a ring of ice forms on the inner side of the cooled walls of the cylindrical containers of the whipping devices, above the area on which the scraping blade acts, said ring of ice being due to the condensation of water vapour on said walls.

This ring of ice often breaks up or dissolves (during storage of the ice cream) with the risk that (large or small) pieces of ice may fall into the underlying ice cream being prepared. In the event of breakage, the pieces of ice could be served together with the ice cream with obvious negative consequences including that of making the ice cream not very appetizing for the consumer. If the ice should instead dissolve (instead of breaking up) it produces a negative effect of water which flows over the ice cream resulting in a serious deterioration in the quality of the product.

US 2010/0175390 A1 discloses a machine for producing ice creams comprising a cylindrical processing tub, whose walls are cooled by a cooling circuit, a stirrer mounted in the tub and comprising means acting on the side walls of the cylinder as well as the bottom, a removable annular collar dimensioned so as to be fitted in stable but easily releasable manner at the inlet of the processing tub, above the stirrer. The collar comprises a cylindrical sleeve which is dimensioned so as to be forced into the inlet of the processing tub and is internally provided with a projecting annular flange which protrudes from the inner cylindrical surface of the sleeve, perpendicular to the longitudinal axis of the latter.

The main object of the present invention is therefore that of providing a whipping device for machines for the production of ice creams and similar products which has characteristics such as to prevent or at least reduce the formation of ice due to the condensation of water vapour inside the whipping container, so as to overcome the aforementioned drawbacks both during whipping of the ice cream mixture and during storage of the already whipped ice cream before dispensing thereof.

Another object of the present invention is that of providing a whipping device which has the aforementioned characteristics and an associated machine for the production of ice cream or similar products containing it which are structurally simple in the sense that they do not give rise to manufacturing complications and/or problems such that they may be mass-produced at a low cost.

A further object of the present invention is to provide a whipping device which has the aforementioned characteristics and an associated machine for the production of ice creams or similar products, which are easy and practical to use for professional operators, for example in an artisanal ice cream parlour.

### Summary of the invention

These objects are achieved primarily by a whipping device according to claim 1

The annular skirt may be arranged, during use, inside the container of the whipping device in a removable or non-removable manner.

The aforementioned insert is made of a thermally insulating material, preferably a plastic material. The height of the annular skirt is chosen so as to cover, during use, an upper portion of the at least one cooled wall of the container above (or immediately above) the at least one scraping blade. In other words, the annular skirt of the insert covers, during use, the upper portion of the cooled wall of the container not subject to the action of the at least one scraping blade.

It has been found that by covering internally the cooled walls of the container of the whipping device along a top part not subject to the action of the scraping blades with an annular insert made of a thermally insulating material (for example a plastic material) the formation of a layer (ring) of ice due to the condensation of vapour on this top part of the cooled walls is advantageously prevented (or drastically reduced). As a result the risk that the underlying ice cream which is being prepared and/or the already whipped ice cream being stored may be contaminated by any ice forming on the inner walls of the whipping device is significantly reduced or entirely eliminated, thereby preserving the qualitative characteristics of the product.

The aforementioned objects are also achieved by a machine for producing or storing ice creams and similar products according to claim 4

In a preferred embodiment, the machine according to the invention further comprises a support element and a scoop associated with each whipping device, each support element being fixed on said flat surface close to the opening of the respective whipping device and having a seat for engaging/disengaging said scoop.

In a preferred embodiment, the lid, for example dome-shaped, has an opening for the passage of the scoop engaged in said seat through the lid in its completely closed position, said scoop being engaged in said seat so that a collecting portion thereof is arranged inside the lid and a gripping portion thereof is arranged outside said lid when the lid is in the completely closed position.

In a preferred embodiment, the support element is provided with a pin which is removably engageable, during use, in the aforementioned cavity of the appendage of the insert.

Further characteristic features and advantages of the present invention will emerge more clearly from the detailed description provided hereinbelow of a preferred, but not exclusive embodiment, with reference to the attached figures, provided by way of a non-limiting example.

### Brief description of the drawings

In these drawings:

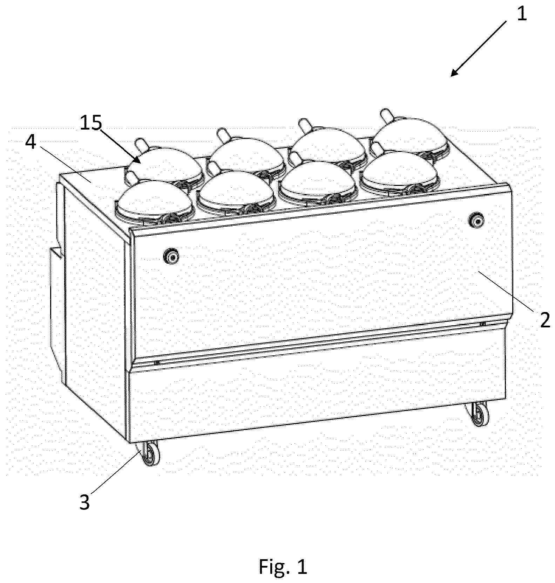

- Figure 1 shows a front perspective view of a machine for producing and storing ice creams and similar products containing a plurality of whipping devices according to the present invention;

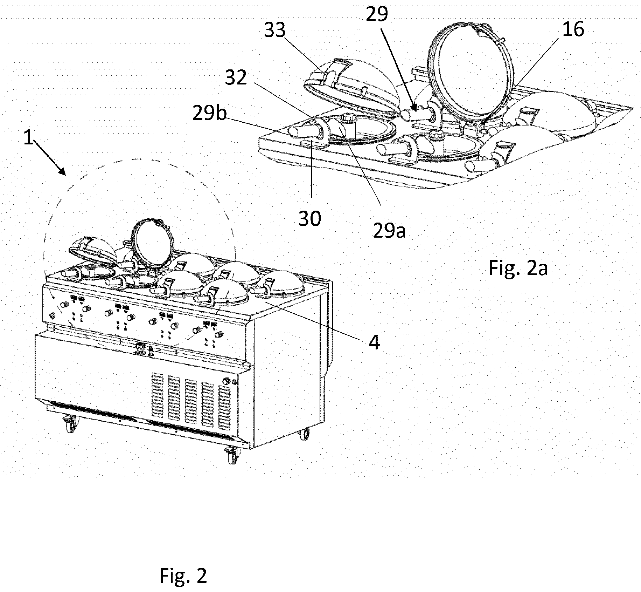

- Figure 2 shows a rear perspective view of the machine according to Figure 1;
- Figure 2a shows a view of a detail of the machine according to Figure 2;
- Figure 3 shows a partially sectioned view of a whipping device according to the present invention with the associated dome-shaped lid;
- Figure 4 shows a partially cross-sectioned cut-away view of the whipping device according to Figure 3;
- Figure 5 shows a perspective view of a whipping device according to the invention without associated dome-shaped lid;
- Figure 6 shows a view of a detail of the whipping device according to Figure 5;
- Figures 7 and 8 show, respectively, a perspective view with the parts separated (exploded view) and a view in the assembled condition of an insert of a whipping device according to the present invention;
- Figure 9 shows a partially cross-sectioned view of the insert according to Figure 8.

### Detailed description

With reference to the aforementioned figures, a machine for the production of ice creams and similar cold food products (for example granitas, sorbets, etc.) is denoted overall by 1.

The machine 1 comprises a frame 2 provided at the bottom with roller wheels 3 and at the top with a flat surface 4 in which a plurality of openings 5 defining cells for containing respective whipping devices 6 according to the invention are formed.

Each whipping device 6 comprises a cylindrical container 7 which is open at the top and has a bottom 8 and a side wall 9 which end at the top with an edge 10 projecting outwards with a peripheral (circumferential) extension. Each cylindrical container 7, during use, is inserted inside a respective opening 5 of the flat surface 4 of the machine with its edge 10 resting on the surface 4. Moreover, each container 7 is cooled by means of cooling means which are conventional per se and arranged on the outside thereof and comprise for example at least one coil 19 arranged externally around the bottom 8 and the wall 9 and designed to have, passing through it, a refrigerating fluid flowing inside a special circuit of a refrigerating system (not shown) conventional per se and arranged in the frame 2 of the machine 1.

Moreover, each whipping device 6 has an associated lid 15, for example dome-shaped, hinged along a hinging element 16 fixed to the flat surface 4 close to the container 7 of the respective whipping device 6 so as to be movable between a completely open position away from said container 7 and a completely closed position of said container 7.

Advantageously, the dome-shaped lid 15 may be made of a transparent material, for example a transparent plastic material, so as to allow the consumer to see both the production of the ice cream or similar product during whipping and the finished product (ice cream or similar whipped product) during storage.

The container 7 of each whipping device 6 has, arranged inside it, a stirrer 11 comprising a central shaft 12 mounted on bearings 13 and rotationally driven in a manner known per se by an electric motor (not shown). The stirrer 11 has, extending radially therefrom, at least one scraping blade 18 on which a respective sliding shoe (or knife) 14 having the same form as the scraping blade is mounted. The blades 18 have suitable dimensions such as to allow, during rotation of the shaft 12, adequate mixing/whipping of the ice cream mixture introduced into the container 7 and scraping of the wall 9 of the container 7.

Advantageously, the sliding shoes or knives 14 are mounted on the respective blades 18 in a removable manner, for example via an engaging and disengaging system conventional per se so as to facilitate the operations of cleaning of the respective whipping device 6 after use. In accordance with the present invention, each whipping device 6 comprises an insert 20 having an annular skirt 21 ending at the top with an edge 22 from which a flange 23 with a peripheral (circumferential) extension projects outwards. A sealing gasket 24 is also provided on the top edge 22 of the annular skirt 21 in order to reduce the noise generated by the lid during closing and ensure a perfect seal preventing the infiltration of impurities inside the whipping container.

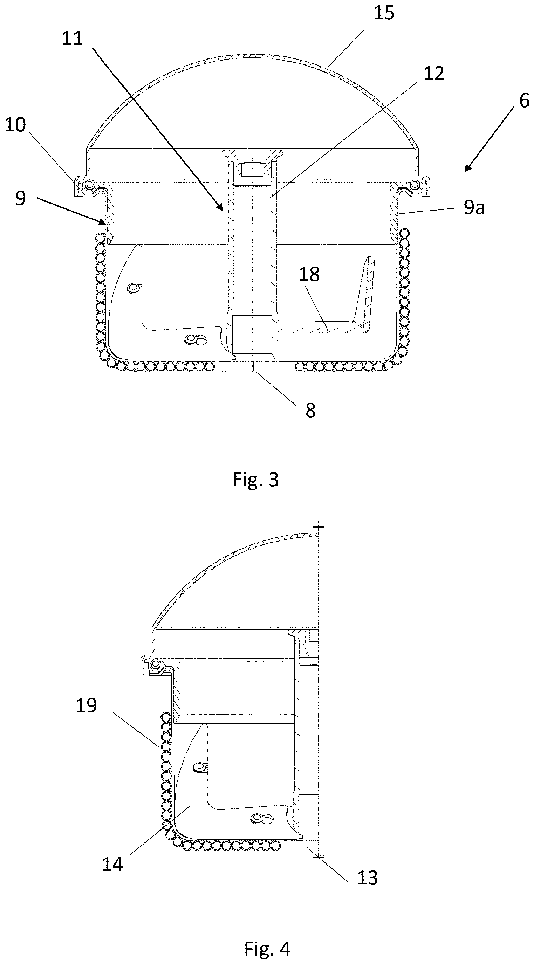

The annular skirt 21 has an outer diameter substantially equal to the inner diameter of the cylindrical container 7 and a suitable height. In particular, as can be seen especially in Figures 3-5, the insert 20, during use, is inserted with the skirt 21 inside the cylindrical container 7 until the perimetral flange 23 rests on the edge 10 of the container 7. In this way, advantageously, the annular skirt 21 comes into contact with and covers a portion 9a of the cooled wall situated (immediately) above the scraping blades 18 as far as the top edge of this cooled wall 9, thereby preventing or at least reducing drastically the formation of ice due to the condensation of water vapour on the cooled wall 9.

In this connection, the insert 20 and in particular its annular skirt 21 are made advantageously of a thermally insulating material, for example a plastic material.

It should be noted, moreover, that the upper flange 23 of the insert 20 and the edge 19 of the container 7 may be made with complementary shapes so as to ensure during use stable resting contact of the insert 20 on the edge 10 of the container 7.

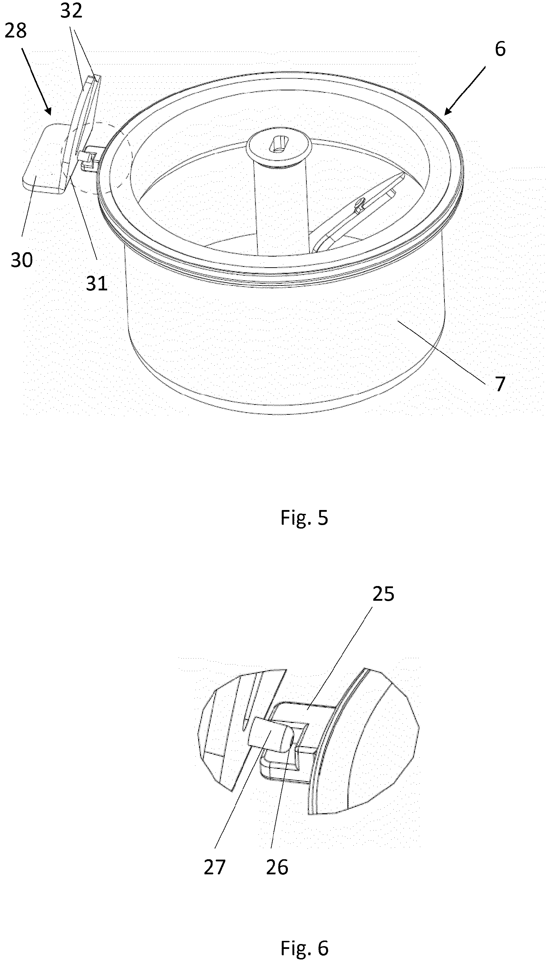

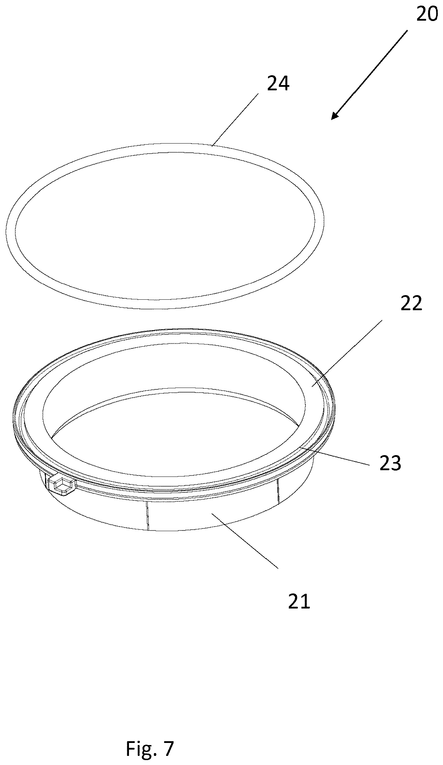

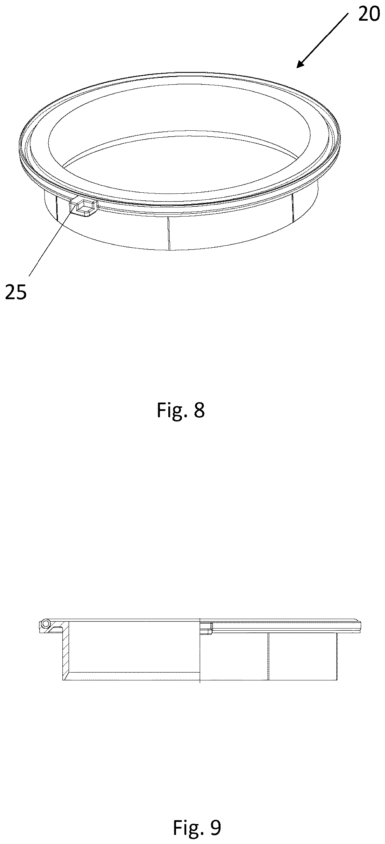

As can be seen in particular in Figures 5-9, the insert 20 also has an appendage 25 which projects outwards from the upper flange 23 and in which a cavity 26 open outwards is formed. Advantageously, this cavity 26 is engageable removably, for example by means of an engaging/disengaging connection conventional per se, with a pin 27 of a support element 28 for a scoop 29 associated with each whipping device 6, each support element 28 being fixed onto the counter 2 of the machine 1 close to the opening 5 of a respective whipping device 6 on the opposite side to the hinging element 16 of the dome-shaped lid 15.

Advantageously, the removable engagement of the appendage 25 of the insert 29 with the pin 27 of the support element 28 allows the insert 20 to be firmly held in the correct position, preventing undesirable movements thereof, in particular during use of the machine 1 and the respective whipping devices 6.

More particularly, the support element 28 has substantially strip-like sides with an angled cross-section and has a plate 30 fixed onto the counter 2, for example by means of threaded inserts and a flange 31 which projects at the top from the plate 30. The flange 31 has at the bottom the aforementioned pin 27 and ends at the top with a pair of prongs 32 defining between them a seat for removably engaging and retaining a scoop 29 for dispensing the finished product (whipped ice cream).

In this way, each whipping device 6 may have associated with it a specifically dedicated scoop 29 which, in the rest condition, may be engaged between the prongs 31 and retained between them with its portion 29a for collecting the finished product facing the respective container 7 of the whipping device and on the inside of the dome-shaped lid 15 (in the completely closed position thereof) and its gripping portion 29b situated at a distance from said container 7 and on the outside of the dome-shaped lid 15.

In this connection, the dome-shaped lid 15 may be made with suitable dimensions so as to keep on the outside the support element 28 for the scoop 29 in its completely closed position and may also have an opening 33 for the passage of the scoop 29 (said opening preferably having dimensions complementing those of the gripping portion 29b of the scoop 29) so that the collecting portion 29a of the scoop 29 is arranged on the inside of the dome-shaped lid 15 and at the same time the gripping portion 29b of the scoop 29 is arranged on the outside thereof in the completely closed position of the dome-shaped lid 15.

This advantageously allows an improvement in the hygiene conditions associated with the dispensing of the finished product since the collecting portion 29a of the scoop 29 is kept at a cooled temperature in the zone of the whipping container 7, being thus protected from any contamination from the outside by means of the covering of the dome-shaped lid 15.

At the same time the gripping portion 29b of the scoop 29 remains outside the alimentary zone of the whipping container 7, at room temperature, in a given position thus giving the consumer the sensation of an extremely tidy counter.

The machine 1 according to a preferred embodiment of the invention also comprises further components which are not described in detail since they are conventional per se, including:
- a refrigerating system which comprises the coils 19 on the outside of the whipping containers 7 and which can be connected to an external electricity network;
- a command and control unit which is operationally connected to the refrigerating system and has a memory containing in particular operating instructions for the operational management of the whipping devices 6 and more generally for all the operating features of the machine, including in particular predefined programs for whipping the ice cream mixture and storing the finished product;
- a plant for cleaning the containers 7 of the whipping devices which can be connected directly to a water supply network and to an extractable discharge outlet of the machine 1.

In the light of the above, the machine and the whipping device according to the invention achieve the predefined objects and are able to obtain various advantages compared to the conventional machines for the production of ice cream.

It should be noted also that the machine for the production of ice cream according to the invention is simple from a constructional point of view and, in particular, the use of additional anti-ice inserts for the whipping containers does not result in manufacturing complications compared to the already existing conventional machines. These machines may even be modernized in a simple and low-cost manner by providing inserts for the whipping containers and making minor functional modifications to the use of these inserts, this constituting another aspect of the present invention.

It should also be noted that the inserts for the whipping containers may be made simply and at a very low cost and therefore do not significantly affect the overall costs for production of the machine according to the invention. In any case, the additional costs arising from the use of the aforementioned inserts are widely offset by the significant functional, operational and energy-saving advantages described above and able to be achieved with the machine according to the invention during use.

Therefore, the machine and the whipping device according to the invention are suitable for low-cost mass-production.

It should also be noted that the machine according to the invention is easy and practical to use for the professional operator who may advantageously work while keeping the counter tidy.

## Claims

1. Whipping device (6) for the production of ice creams and similar cold products such as granitas, sorbets, comprising a cylindrical container (7) which is open at the top and has a bottom (8) and a side wall (9) ending at the top with an edge (10) projecting outwards with a peripheral extension, the container (7) being cooled by outer cooling means (19), a stirrer (11) arranged inside said container (7) and provided with at least one scraping blade (18) acting on at least one cooled wall (9) of said container (7), an insert (20) made of a thermally insulating material having an annular skirt (21) with an outer diameter substantially equal to the inner diameter of the container (7) and a predetermined height, said annular skirt being arranged, during use, inside said container (7) in contact with or close to said at least one cooled wall (9) so as to cover a portion (9a) of said at least one cooled wall (9) above said at least one scraping blade (18), **characterized in that** said annular skirt (21) of the insert (20) ends at the top with a flange (23) projecting outwards with a peripheral extension, said flange, during use, resting on said peripherally extending edge (10) of said container (7).

2. Whipping device (6) according to claim 1, wherein said insert (20) is made of a plastic material.

3. Whipping device (6) according to anyone of the preceding claims, wherein said insert (20) comprises an appendage (25) which projects outwards from the upper flange (23) and in which a cavity (26) open outwards is formed.

4. Machine (1) for producing and storing ice creams and similar cold products such as granitas, sorbets, comprising a frame (2) provided with a flat surface (4) in which at least one opening (5) is formed;
- at least one whipping device (6) according to anyone of claims 1 to 3 arranged with the respective container (7) in said at least one opening (5);
- a lid (15), for example dome-shaped, associated with each whipping device (6) and movable between a completely open position away from said whipping device (6) and a position completely closed on said whipping device (6).

5. Machine (1) according to claim 4, further comprising a support element (28) and a scoop (29) associated with each whipping device (6), each support element (28) being fixed on said flat surface (4) close to the opening (5) of the respective whipping device (6) and having a seat (32) for engaging/disengaging said scoop (29).

6. Machine (1) according to claim 4 or 5, wherein said dome-shaped lid (15) has an opening (33) for the passage of the scoop (29) engaged in said seat (32) through said lid (15) in its completely closed position, said scoop being engaged in said seat (32) so that a collecting portion (29a) thereof is arranged inside the lid (15) and a gripping portion (29b) thereof is arranged outside said lid (15) when the lid (15) is in the completely closed position.

7. Machine (1) according to any one of the preceding claims 4 to 6, wherein said support element (28) is provided with a pin (27) which is removably engageable, during use, in said cavity (26) of the appendage (25) of the insert (20).

## Patentansprüche

1. Aufschlagvorrichtung (6) zur Herstellung von Eiscremes und ähnlichen Kälteprodukten, wie etwa Granitas, Sorbets, die einen zylindrischen Behälter (7), der an der Oberseite offen ist und einen Boden (8) und eine Seitenwand (9), die an der Oberseite endet, aufweist, wobei eine Kante (10) mit einer Umfangserweiterung nach außen vorsteht, wobei der Behälter (7) durch äußere Kühlmittel (19) gekühlt wird, einen Rührer (11), der innerhalb des Behälters (7) angeordnet ist und mit mindestens einem Schabemesser (18) bereitgestellt ist, das auf mindestens eine gekühlte Wand (9) des Behälters (7) einwirkt, einen Einsatz (20), der aus einem wärmeisolierenden Material besteht und eine ringförmigen Schürze (21) mit einem Außendurchmesser, der im Wesentlich gleich dem Innendurchmesser des Behälters (7) ist, aufweist, und eine vorbestimmte Höhe umfasst, wobei die ringförmige Schürze während Verwendung innerhalb des Behälters (7) in Berührung mit oder nahe der mindestens einen gekühlten Wand (9) angeordnet ist, um einen Abschnitt (9a) der mindestens einen gekühlten Wand (9) über dem mindestens einen Schneidemesser (18) abzudecken, **dadurch gekennzeichnet, dass** die ringförmige Schürze (21) des Einsatzes (20) an der Oberseite mit einem Flansch (23) endet, der mit einer Umfangserweiterung nach außen vorsteht, wobei der Flansch während Verwendung auf der sich in Umfangsrichtung erstreckenden Kante (10) des Behälters (7) aufliegt.

2. Aufschlagvorrichtung (6) nach Anspruch 1, wobei der Einsatz (20) aus einem Kunststoffmaterial besteht.

3. Aufschlagvorrichtung (6) nach einem der vorhergehenden Ansprüche, wobei der Einsatz (20) ein Zubehörteil (25) umfasst, das von dem oberen Flansch (23) nach außen vorsteht und in dem ein nach außen offener Hohlraum (26) gebildet ist.

4. Maschine (1) zur Herstellung und Lagerung von Eiscremes und ähnlichen Kälteprodukten, wie etwa Granitas, Sorbets, die Folgendes umfasst einen Rahmen (2), der mit einer flachen Fläche (4) bereitgestellt ist, in der mindestens eine Öffnung (5) gebildet ist;
- mindestens eine Aufschlagvorrichtung (6) nach einem der Ansprüche 1 bis 3, die mit dem entsprechenden Behälter (7) in der mindestens einen Öffnung (5) angeordnet ist;
- einen Deckel (15), zum Bespiel kuppelförmig, der jeder Aufschlagvorrichtung (6) zugeordnet und zwischen einer vollständig offenen und von der Aufschlagvorrichtung (6) entfernten Position und einer vollständig auf der Aufschlagvorrichtung (6) geschlossenen Position bewegbar ist.

5. Maschine (1) nach Anspruch 4, die ferner ein Stützelement (28) und einen Portionierer (29), die jeder Aufschlagvorrichtung (6) zugeordnet sind, umfasst, wobei jedes Stützelement (28) in der Nähe der Öffnung (5) der entsprechenden Aufschlagvorrichtung (6) an der flachen Fläche (4) befestigt ist und eine Aufnahme (32) zum Ineingriffnehmen/Freigeben des Portionierers (29) aufweist.

6. Maschine (1) nach einem der Ansprüche 4 oder 5, wobei der kuppelförmige Deckel (15) eine Öffnung (33) zum Passieren des mit der Aufnahme (32) im Eingriff stehenden Portionierers (29) durch den Deckel (15) in seiner vollständig geschlossenen Position aufweist, wobei der Portionierer mit der Aufnahme (32) in Eingriff steht, sodass ein Sammelabschnitt (29a) davon innerhalb des Deckels (15) angeordnet ist und ein Greifabschnitt (29b) davon außerhalb des Deckels (15) angeordnet ist, wenn sich der Deckel (15) in der vollständig geschlossenen Position befindet.

7. Maschine (1) nach einem der vorhergehenden Ansprüche 4 bis 6, wobei das Stützelement (28) mit einem Stift (27) bereitgestellt ist, der während Verwendung in dem Hohlraum (26) des Zubehörteils (25) des Einsatzes (20) entfernbar in Eingriff bringbar ist.

## Revendications

1. Dispositif de fouettage (6) pour la production de crèmes glacées et de produits froids similaires comme des granités et des sorbets, comprenant un récipient cylindrique (7) qui est ouvert au sommet et qui présente un fond (8) et une paroi latérale (9) se terminant au sommet avec un bord (10) saillant vers l'extérieur avec une extension périphérique, le récipient (7) étant refroidi par un moyen de refroidissement extérieur (19), un agitateur (11) agencé à l'intérieur dudit récipient (7) et doté d'au moins une lame de raclage (18) agissant sur au moins une paroi refroidie (9) dudit récipient (7), un insert (20) constitué d'un matériau thermiquement isolant présentant une jupe annulaire (21) avec un diamètre extérieur sensiblement égal au diamètre intérieur du récipient (7) et une hauteur prédéterminée, ladite jupe annulaire étant agencée, en utilisation, à l'intérieur dudit récipient (7) en contact avec ou à proximité de ladite au moins une paroi refroidie (9) de manière à recouvrir une partie (9a) de ladite au moins une paroi refroidie (9) au-dessus de ladite au moins une lame de raclage (18), **caractérisé en ce que** ladite jupe annulaire (21) de l'insert (20) se termine au sommet avec une bride (23) saillante vers l'extérieur avec une extension périphérique, ladite bride, en utilisation, reposant sur ledit bord d'extension périphérique (10) dudit récipient (7) .

2. Dispositif de fouettage (6) selon la revendication 1, dans lequel ledit insert (20) est constitué d'une matière plastique.

3. Dispositif de fouettage (6) selon l'une quelconque des revendications précédentes, dans lequel ledit insert (20) comprend un appendice (25) saillant vers l'extérieur depuis la bride supérieure (23) et dans lequel une cavité (26) ouverte vers l'extérieur est formée.

4. Machine (1) pour la production et le stockage de crèmes glacées et de produits froids similaires comme des granités et des sorbets, comprenant un cadre (2) doté d'une surface plate (4) dans laquelle au moins une ouverture (5) est formée ;
- au moins un dispositif de fouettage (6) selon l'une quelconque des revendications 1 à 3 agencé avec le récipient (7) respectif dans ladite au moins une ouverture (5) ;
- un couvercle (15), par exemple en forme de dôme, associé à chaque dispositif de fouettage (6) et mobile entre une position complètement ouverte à l'écart dudit dispositif de fouettage (6) et une position complètement fermée sur ledit dispositif de fouettage (6).

5. Machine (1) selon la revendication 4, comprenant en outre un élément de support (28) et une pelle (29) associée à chaque dispositif de fouettage (6), chaque élément de support (28) étant fixé sur ladite surface plate (4) à proximité de l'ouverture (5) du dispositif de fouettage (6) respectif et présentant un logement (32) pour engager/désengager ladite pelle (29).

6. Machine (1) selon la revendication 4 ou 5, dans laquelle ledit couvercle en forme de dôme (15) présente une ouverture (33) pour le passage de la pelle (29) engagée dans ledit logement (32) à travers ledit couvercle (15) dans sa position complètement fermée, ladite pelle étant engagée dans ledit logement (32) de sorte qu'une partie collectrice (29a) de celle-ci soit agencée à l'intérieur du couvercle (15) et qu'une partie de préhension (29b) de celle-ci soit agencée à l'extérieur dudit couvercle (15) lorsque le couvercle (15) est en position complètement fermée.

7. Machine (1) selon l'une quelconque des revendications 4 à 6, dans laquelle ledit élément de support (28) est doté d'une tige (27) qui peut être engagée de manière amovible, en utilisation, dans ladite cavité (26) de l'appendice (25) de l'insert (20).
